# EUROPEAN PATENT APPLICATION

(11) **EP 0 708 444 A1**
(43) Date of publication of application: **24.04.1996**
(21) Application number: 95307120.6
(22) Date of filing: 09.10.1995
(51) Int. Cl.: G11B 23/18, G11B 23/24, G11B 5/09, G11B 5/008, G11B 20/10

(54) **An apparatus for accessing a linear serpentine tape**

(30) Priority: 21.10.1994 US 327064
(71) Applicant: Hewlett-Packard Company, Palo Alto, California 94304 (US)
(72) Inventor: Hogan, Josh, Loa Altos, California 94022 (US); Barndt, Richard D., Fremont, California 94555 (US); Elder, Richard E., Palo Alto, California 94306 (US); Jeans, Albert H., Mountain View, California 94043 (US)
(74) Representative: Williams, John Francis

(57) **Abstract**

An apparatus (301, 401) for writing and reading digital information to a linear serpentine tape (100, 312), which is connected to a tape drive (308) controlling the speed of the motion of the tape (312). The tape (100, 312) has many tracks (102, 104), each track (102) having a physical end (106). The apparatus (301, 401) includes a buffer memory (304) electrically coupled to the tape (100, 312), and a controller (306) connected to the buffer (304) and the tape drive (308). When the apparatus (301, 401) is writing to the tape (100, 312) and the end (106) of a track (102) is approaching, accessing the tape (100, 312) will be interrupted, and the controller (306) will temporarily store in the buffer (304) information that should have been written to the tape (100, 312) so that although accessing the tape will be interrupted, there will be no discontinuity in writing the information to the tape (100, 312). When the apparatus (301, 401) is used to read information from the tape (100, 312), in the beginning, when the apparatus starts to read from the tape (100, 312), the buffer (304) is significantly filled by information from the tape. Then, when the end (106) of a track (102) is approaching, accessing the tape (100, 312) again will be interrupted, and the controller (306) will temporarily use the information stored in the buffer (304) as information read from the tape (100, 312) so that there will be no discontinuity in reading from the tape (100, 312).

## Description

The present invention relates generally to a storage medium, and more particularly to an apparatus for recording to and reading from a linear serpentine tape.

There are two common approaches to store information in a magnetic tape. The first approach is based on a helical scan, and the second approach is based on a linear scan. For the helical scan, as a tape moves linearly across a magnetic head, the head spins in a helical manner across the width of the tape to store information in the tape.

For the linear scan, the relative motion between a magnetic head and a tape is linear. Again, for the linear scan, there are two common approaches. One approach has only one track on the tape. Another approach has many tracks, with every track physically adjacent to another track on the tape. Typically, for the many tracks tape, during reading or recording, the tape moves across the head, with the head over one track of the tape, until the head reaches the physical end of the track. Then, the head moves to another track, and the tape moves back across the head. Such tapes are known as linear serpentine tapes.

When one records information onto a linear serpentine tape, as the tape moves to a physical end of a track, the tape has to slow down, stop and then turn around for the head to go over another track. If the information is a "live" information, during this period of discontinuity, information continues to come in. Due to the interruption of the tape in turning around, information not captured onto the tape may be lost.

In fact, the problem caused by the interruption of the tape is not confined in recording. When a linear serpentine tape is being read, and the head reaches the physical end of a track, the head again has to slow down, stop and move to another track. Due to such interruption, no data are available to be read during that time. If one is watching a movie stored in a linear serpentine tape, one does not want the movie to slow down or to stop at the end of each track. One wants to see a continuous or seamless flow of pictures, without interruption. However, the relative repositioning of the head onto different tracks on the tape causes a certain delay in the availability of the data.

Thus, there is a need for an apparatus to achieve continuous or seamless recording to and reading from a linear serpentine tape.

The invention proposes an apparatus and a method as defined in claims 1 and 9 respectively.

When the preferred embodiment of the present invention is used to record information to a tape, incoming information goes through a buffer memory before going to the tape. When the head is approaching the physical end of one of its tracks, the tape has to slow down, stop and reverse its direction. At that time, incoming information is temporarily stored in the buffer. After the reverse, when the tape is again ready to record information, data are transferred from the buffer to the track at a slightly higher rate than data being written to the buffer. This difference in transfer rate continues until the buffer is almost empty. At that point, the data transfer rate from the buffer to the track is made to be substantially the same as the rate at which data is being written to the buffer. Based on the above described scheme, continuous un-interrupted recording of information is achieved despite discontinuities in accessing the tape.

In the case of reading information from the tape, data from the tape first go through the buffer before they go out from the tape drive. When the tape is first read, the buffer is significantly filled before the buffer starts to release its data. Then the rate of data going into the buffer is the same as the rate of data going out of the buffer. When the head is approaching the physical end of a track, data transfer from the tape to the buffer stops, but data released from the buffer stay at the same rate. The size of the buffer is designed so that during the interim period, when the tape is making the turn, data in the buffer are sufficient to fill the discontinuity in data transfer from the tape. Thus, during this period, data in the buffer are being depleted. But before the buffer is empty, the tape should have reversed and should have been ready to transfer data again. When the tape is ready, at first, the tape is going slightly faster, and the buffer is capturing data from the tape at a rate slightly higher than the rate of data going out of the buffer. This difference in capturing rate is maintained until the buffer is significantly filled. Then, the tape slows to its normal rate, and the rate of capturing data from the tape goes back to the rate of data going out of the buffer.

Based on the above apparatus, there will be a continuous and seamless transfer of information both from and to a linear serpentine tape to the outside. Other aspects and advantages of the present invention will become apparent from the following detailed description, which, when taken in conjunction with the accompanying drawings, illustrates by way of example the invention. In the drawings:

Figure 1 shows a linear serpentine tape.

Figures 2A and 2B schematically represent two types of magnetic heads.

Figure 3 shows a system embodying a preferred embodiment of the present invention storing data to a magnetic medium.

Figure 4A shows the variation in the rate of data from the buffer during the recording stage in the present invention.

Figure 4B shows the amount of data in the buffer during the recording stage in the present invention.

Figure 5 shows a system embodying a preferred embodiment of the present invention reading data from a magnetic medium.

Figure 6A shows the variation in the rate of data stored by the buffer during the reading stage in the present invention.

Figure 6B shows the amount of data in the buffer during the reading stage in the present invention.

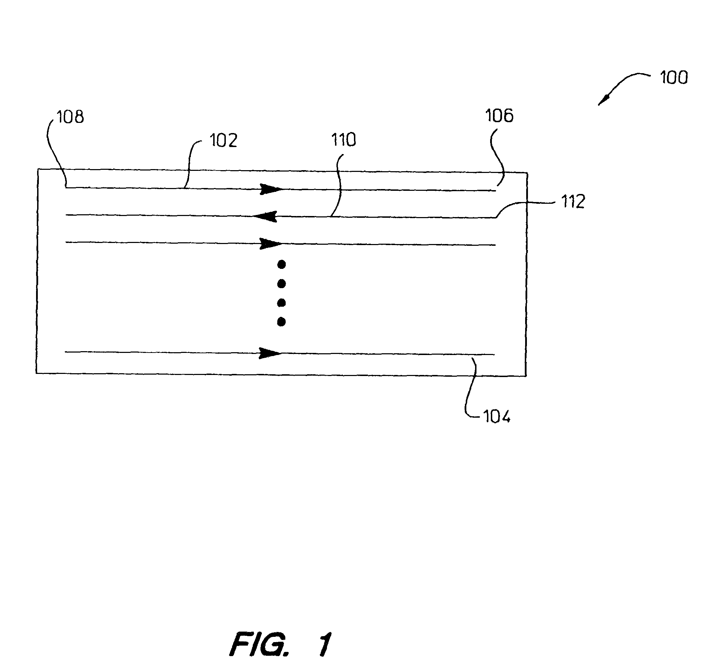

Same numerals in Figures 1-6 are assigned to similar elements in all the figures. Embodiments of the invention are discussed below with reference to Figures 1-6. However, those skilled in the art will readily appreciate that the detailed description given herein with respect to these figures is for explanatory purposes as the invention is defined only in the claims.

Figure 1 shows a linear serpentine tape 100 with a number of tracks, such as tracks 102, 104. Each track has a certain direction indicating the direction of the data stored in the track. Each track has two ends, for example, the right end 106 and the left end 108 of the track 102, and the right end 112 of the track 110.

Typically, the tape 100 goes across a magnetic head, with the head over one of the tracks. When the head approaches the end of the track, the tape would slow down, stop and turn around. During this interim period, the head would move to another track by moving up or down one or a number of track widths. Then, after the tape turns around, the other track would travel across the head.

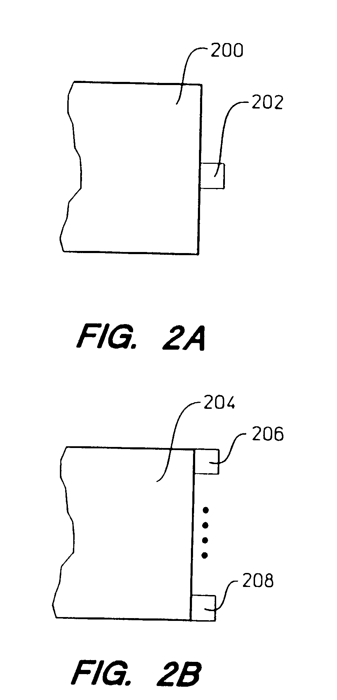

Figures 2A and 2B show schematically two types of magnetic heads for reading from and writing to the tracks. The magnetic head 200 shown in Figure 2A is a single-channel head or a head with only one channel 202. The magnetic head 204 shown in Figure 2B is a multi-channel head or a head with a number of channels, such as 206 and 208. This type of multiple-channel head is for reading or recording a set of tracks at one time, with each track going across a channel. All the channels would reach the end of their corresponding tracks at the same time. Then the multiple-channel head would move up or down to another set of tracks, and the other set of tracks would go across the channels. The present invention is illustrated through the single-channel head. However, the present invention is equally applicable to the multi-channel head, with each track on the tape being a set of tracks.

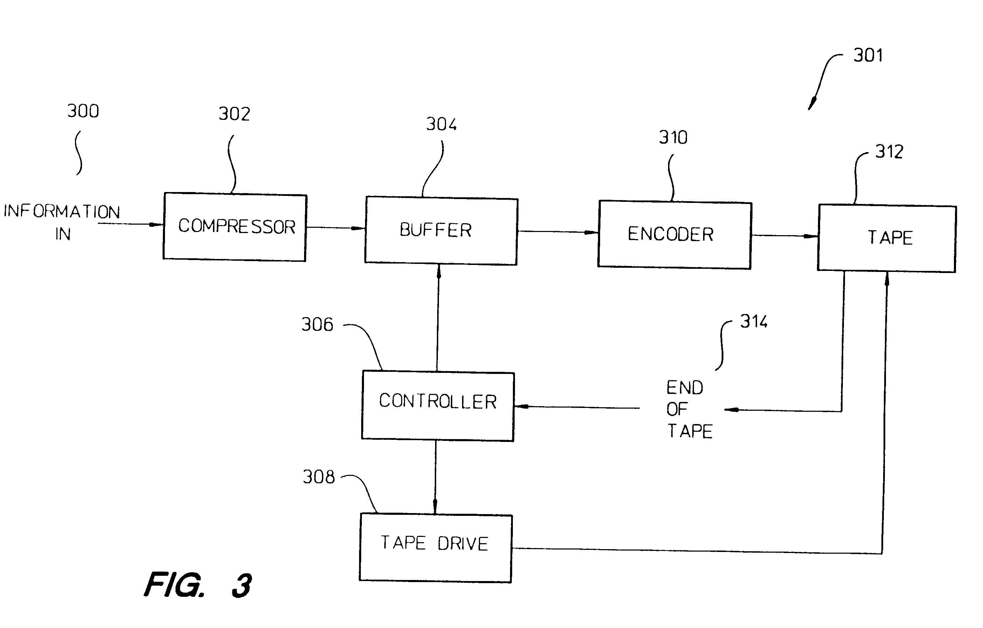

Figure 3 shows one preferred embodiment 301 illustrating the present invention being used to record information. Generally during recording, digital information 300 is first compressed by a compressor 302 so as to reduce the amount of memory space required. In the present invention, the compressed signal then goes to a buffer 304. The data from the buffer are typically encoded by an encoder 310 before the data are written to a linear serpentine tape 312. As the magnetic head approaches the end of a track on the tape, an end of tape signal 314 will be sent to a controller 306. Based on this signal, the controller 306 modifies the speed and the amount of data temporarily stored by the buffer 304. The end of tape signal also provides an indicator for the controller 306 to control the speed of a tape drive 308, which sets the speed of the tape 312 going over a magnetic head. The present disclosure will not discuss in detail how each component shown in Figure 3 is built because building each of those components should be obvious to those skilled in the art.

The digital information 300 may be an audio or a video signal. They may be from a camera or they may be other types of digital signals. The buffer 304 is preferably a first-in-first-out memory device; it can be a randum-access-memory.

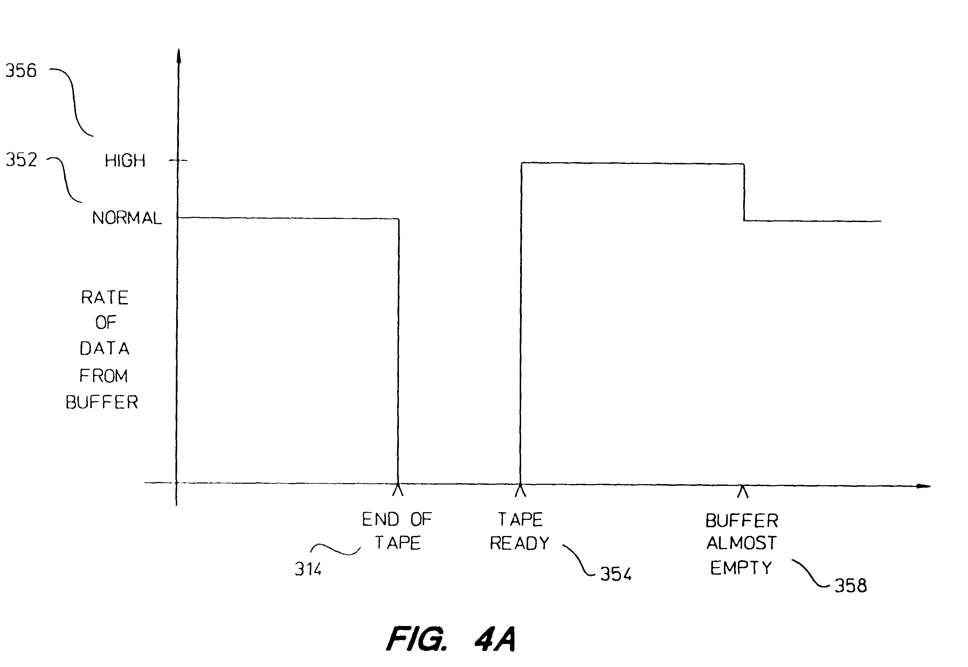

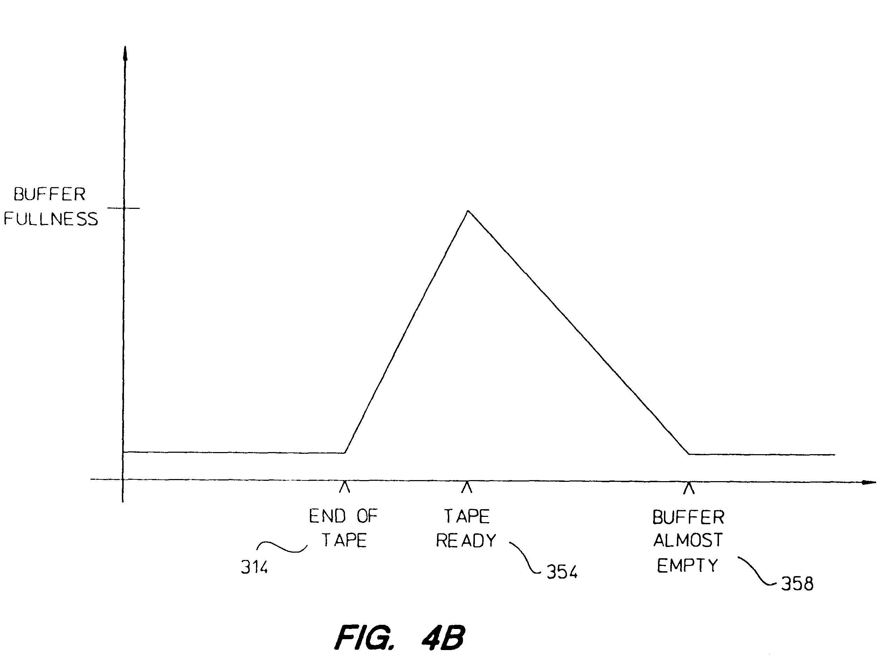

Figure 4A shows the rate of data from the buffer 304 to the encoder 310 during the recording stage, and Figure 4B shows the corresponding amount of data in the buffer 304. The rate of data transfer can be set by varying the clock rate controlling the data going out of the buffer 304 to the encoder 310. Typically, data are coming out at a normal rate 352 or at a rate the same as the rate of data going into the buffer 304 from the compressor 302. Therefore, the buffer is not storing much data, or the buffer is almost empty. During this time, the tape is also running at a normal rate to record data from the encoder 310.

When the head is approaching a physical end of a track, an end of tape signal will be sent to the controller 306. Based on that signal, the buffer 304 stops sending data out, and the tape gradually stops and turns around. However, data 300 are still going into the buffer. Such incoming data are temporarily stored in the buffer 304, and the buffer 304 is being filled up.

When the tape has made the turn and the magnetic head is on another track, the tape speed gradually goes up and the tape is ready to record data again. The time lapsed between the end of tape and when the tape is ready is usually fixed by the mechanics of the system shown in Figure 3. Thus, after a certain fixed amount of time, the buffer 304 will re-start sending data out to the encoder 310. Another scheme in the preferred embodiment is to send a tape ready signal 354 to the controller 306 when the tape is ready to record signal again.

When the tape is ready, the controller 306 will send a signal to the buffer 304, indicating to the buffer to re-start sending data to the encoder. However, at this point, the buffer is quite full of data. Thus, in the beginning, the rate of data going out of the buffer to the encoder is at a high rate 356, and the tape drive is also running at a high rate to capture more data from the encoder. This high rate is maintained until the buffer 304 is almost empty 358 again. Then the rate of data from the buffer 304 to the encoder 310 goes back to the normal rate 352.

Based on the above process, data 300 are going into the system continuously eventhough tape accessing has been interrupted.

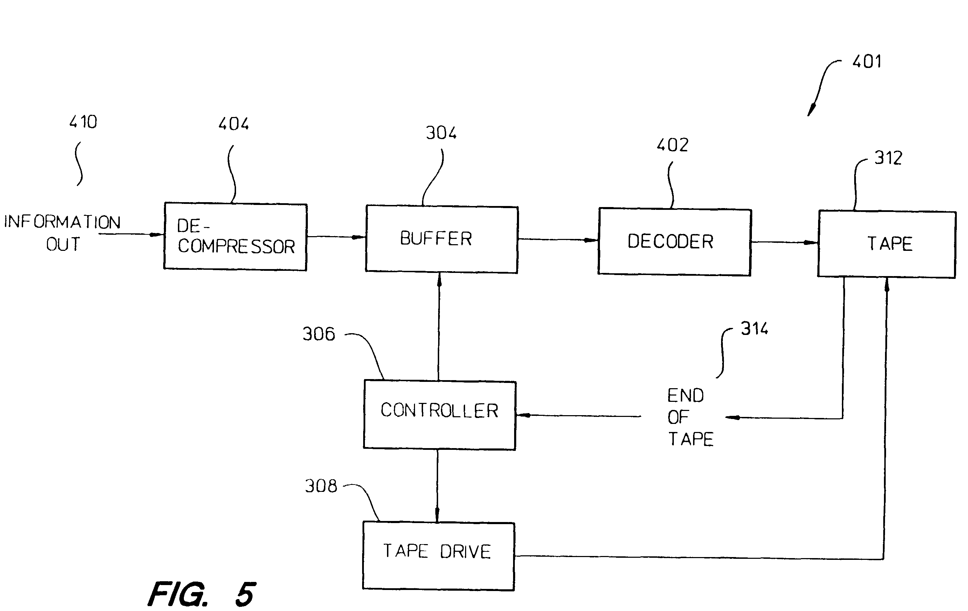

Figure 5 shows one preferred embodiment 401 illustrating the present invention being used to read information from the tape. It is similar to the system shown in Figure 3. Generally during reading, digital data from the tape 312 are first decoded by the decoder 402. In the present invention, the decoded signal then goes to the buffer 304. The data from the buffer may be compressed by the compressor 302, so they should be de-compressed by the de-compressor 404 before the information 410 is sent out. As the magnetic head approaches the end of a track on the tape, an end of tape signal 314 will be sent to the controller 306. Based on this signal, the controller 306 modifies the speed and the amount of data temporarily stored by the buffer 304. Also, the end of tape signal provides an indication for the controller 306 to control the speed of the tape drive 308.

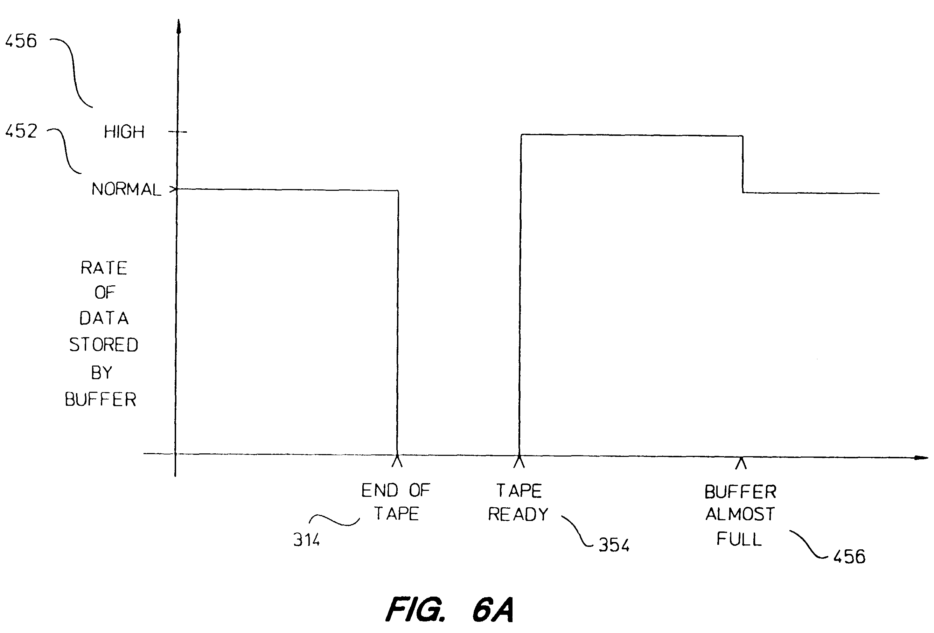

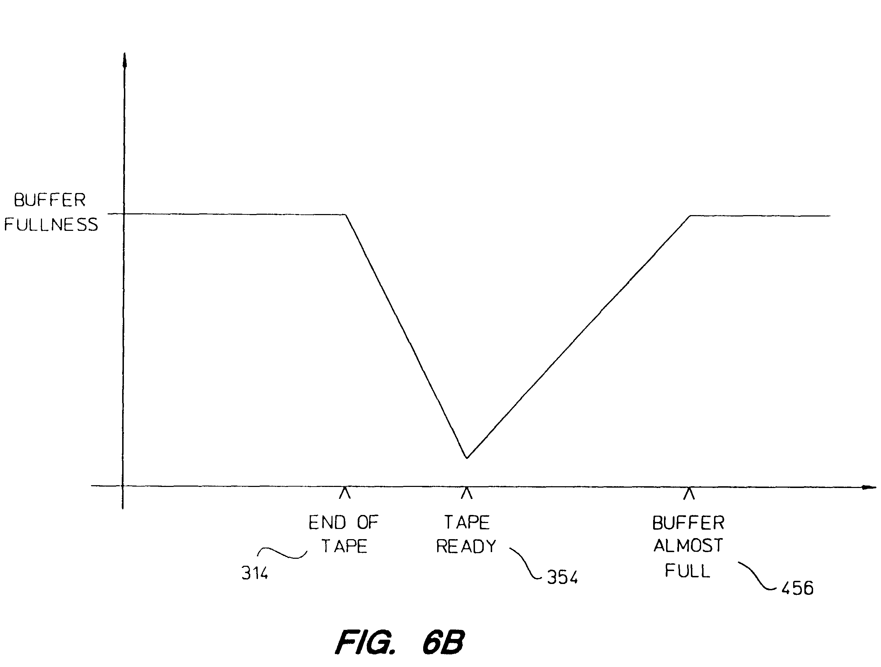

Figure 6A shows the rate of data stored by the buffer 304 during the reading stage, and Figure 6B shows the corresponding amount of data in the buffer. The rate of data stored can again be set by varying the clock rate controlling the data received by the buffer 304 from the decoder 402.

In the beginning when the system shown in Figure 5 starts reading information 410 from the tape 312, the buffer is first stored to an almost full level. From then on, data are being stored in the buffer at a normal rate 452 or at a rate the same as the rate of data going to the de-compressor 404; and the tape is also running at a normal rate to send data to the decoder 402. Therefore, the buffer is constantly almost full.

When the head is approaching a physical end of a track, an end of tape signal 314 will be sent to the controller 306. Based on that signal, the buffer 314 stops storing data from the tape, and the tape gradually stops and turns around. However, data in the buffer 304 are still going to the de-compressor. With such outgoing data, the buffer 304 is temporarily depleted.

The size of the buffer is designed so that during this interruption with the tape making the turn, data in the buffer are sufficient to fill the discontinuity in data transfer from the tape. During this period, the buffer is gradually depleted. But, before the buffer is empty, the tape has already made the turn. The speed of the tape gradually goes back up, and the tape is ready to transfer data again.

The method to indicate the time lapsed between the tape making the turn and the tape being ready has been described above. When the tape is ready to be read, the buffer is almost empty. At that point, the controller 306 will send a tape ready signal to the buffer 304, indicating to the buffer to re-start storing data from the decoder. In the beginning, the rate of data going into the buffer from the decoder is at a high rate 456, and the tape drive is also running at a high rate to send more data to the decoder 402. This high rate is maintained until the buffer 304 is almost full 458. Then the rate of data received by the buffer 304 from the decoder 402 goes back to the normal rate 452.

Based on the above process, information 410 coming out from the system are continuous eventhough tape accessing has been interrupted.

The above systems shown in Figures 3 and 5 have the encoder 310, the decoder 402, the compressor 302 and the de-compressor 404. In other preferred systems embodying the invention, they are not required. Also, the systems shown in Figures 3 and 5 may be the same system. The system reading the tape can also store data to the tape, and vice versa. In other words, the encoder can be made to decode, the compressor can be made to de-compress, and the data lines can be made bi-directional.

The present invention is not limited to be applied to linear serpentine tapes. It can be applied to any storage medium having many parts, such as the many tracks. As long as there is an inherent delay in the availability of different parts of the medium, one may want to use the present invention. The delay can be due to the relative repositioning of the medium and the recording or reading head, when the head goes from one part to another part of the medium. Similar delay will occur if each part of the medium is one tape or disk, and the magnetic head has to go from one tape or disk to another tape or disk. The present invention as shown in Figures 3 and 5 may be applied with the tape drive modified accordingly, such as to a disk drive. Again, the buffer 304 can be used to eliminate the discontinuities due to the head going from one part of the medium to another, as described above.

### Working Examples

The invention will be further clarified by a consideration of the following examples, which are intended to be purely exemplary of using the invention.

During recording, the normal data transfer rate is 20 Mbits per second or Mbit/s, and the time to slow down, stop and to speed or the time between the end of tape 314 and tape ready 354 is 0.3 seconds. Total data to be stored in the buffer during this interim period is 20*0.3 or 6 Mbits. A suitable buffer size with sufficient headroom is 8 Mbits with data stored increased from 1 Mbits to 7 Mbits. The time to substantially empty the buffer after the tape turns around, using 1% higher than normal tape speed, is 30 seconds. In other words, the time from tape ready 354 to buffer almost empty 358 is 30 seconds. This is because the amount of time required to transfer 6 Mbits at 0.2Mbit/s is 30 seconds, with 0.2Mbits/s being 1% of 20Mbits/s.

One method to generate the end of tape and the tape ready signals is to have a small hole close to the physical end of a track and another small hole close to the physical beginning of a track. As the head is approaching the physical end of a track, a light sensor would sense light through the corresponding small hole from a light source. The sensor would then activate a circuit to generate an end of tape signal. Similarly, as the head is close to the beginning of another track and is ready to access that track, another light sensor would sense light through the corresponding small hole from another light source. That sensor would then activate another circuit to generate a tape ready signal.

During reading, the normal data transfer rate is 20 Mbit/s, and the time to slow down, stop and bring the tape back up to speed is 0.3 seconds. Total data to be depleted from the buffer during this interim period is 20*0.3 or 6 Mbits. A suitable memory size with sufficient headroom is 8 Mbits with data stored decreased from 7 Mbits to 1 Mbits. The time to substantially refill the buffer after the tape turns around, using 1% higher than normal tape speed, is 30 seconds. In other words, the time from tape ready 354 to buffer almost full 456 is 30 seconds. This is again because the amount of time required to transfer 6 Mbits at 0.2Mbit/s is 30 seconds, with 0.2Mbits/s being 1% of 20Mbits/s.

## Claims

1. An apparatus (301) using a magnetic head (200, 204) for writing digital information (300) to a storage medium (100, 312) having a plurality of parts (102, 104) and an inherent delay in the availability of the medium (100, 312) due to the relative repositioning of the medium (100, 312) and the magnetic head (200, 204) when the head goes from one part to another part of the medium, the medium being connected to a drive (308) for controlling the speed of the motion of the medium (100, 312), each part (102) of the medium having a physical end (106), the apparatus comprising:
a buffer memory (304) electrically coupled to the medium(312); and
a controller (306) connected to the buffer (304);
such that when the apparatus (301) is writing to a part (102) of the medium (100, 312), and the end (106) of that part (102) is approaching, accessing the medium (100, 312) will be interrupted, and the controller (306) will temporarily store in the buffer (304) information that should have been written to the medium (100, 312) so that although accessing the medium (100, 312) will be interrupted, there will be no discontinuity in writing information to the medium (100, 312).

2. An apparatus (401) as recited in claim 1 wherein the apparatus is also for reading digital information from the medium (100, 312), such that:
in the beginning, when the apparatus (401) starts to read from the medium (100, 312), the buffer (304) is first significantly filled by information from the medium; and
when the apparatus is reading from a part (106) of the medium (100), and the end of that part is approaching, accessing the medium will be interrupted, and the controller (306) will temporarily reduce the information stored in the buffer (304) as information read from the medium (100, 312) so that although accessing the medium will be interrupted, there will be no discontinuity in reading from the medium (100, 312).

3. An apparatus (301, 401) as recited in claims 1 or 2, wherein: the medium (100, 312) is a linear serpentine tape (100); the drive is a tape drive (308); and each part of the medium is a track on the tape.

4. An apparatus (301, 401) as recited in claim 3, wherein:
the controller (306) is also connected to the tape drive (308);
after the apparatus (301, 401) has finished writing to one track and is beginning to write to the beginning of another track, the controller (306) increases the speed of the tape drive (308) to reduce the temporarily stored information in the buffer (304); and
after the apparatus (301, 401) is finished reading from one track and is beginning to read from the beginning of another track, the controller (306) increases the speed of the tape drive (308) to increase the information stored in the buffer (304).

5. An apparatus (301, 401) as recited in claims 3 or 4, wherein the buffer (304) is a First-In-First-Out Random Access Memory.

6. An apparatus (301, 401) as recited in claims 3 or 4, further comprising a data compressor/decompressor (302, 404) connected to the buffer (304) to reduce the size of the buffer (304) required for storage.

7. An apparatus (301, 401) as recited in claims 3 or 4, wherein the tape (312) is a video-tape.

8. An apparatus (301, 401) as recited in claims 3 or 4, wherein the tape (312) is an audio-tape.

9. A method for writing digital information (300) using a magnetic head (200,204) to a storage medium (100,312) which has a plurality of parts (102,104) each having a physical end (106), and an inherent delay in the availability of the medium (100,312) due to the relative repositioning of the medium (100,312) and the magnetic head (200,204) when the head goes from one part to another part of the medium (100,312), the method comprising: sensing the approaching end (106) of a part (102) of the medium (100,312); interrupting access to the medium (100,312); and temporarily storing in a buffer (304) information that should have been written to the medium (100,312), whereby although access to the medium (100,312) is interrupted, there will be no discontinuity in writing information to the medium (100,312).

10. A method as claimed in claim 9, wherein after the writing is completed on a first part (102) of the medium, its speed is increased at the start of the second part so as to record the information temporarily stored in the buffer (304).
